# EUROPÄISCHE PATENTSCHRIFT

(11) **EP 1 641 662 B1**
(45) Veröffentlichungstag und Bekanntmachung des Hinweises auf die Patenterteilung: **23.06.2010**
(21) Anmeldenummer: 04729609.0
(22) Anmeldetag: 27.04.2004
(51) Int. Cl.: B60S 1/04

(54) **SCHEIBENWISCHVORRICHTUNG FÜR EIN KRAFTFAHRZEUG**
WINDSHIELD WIPING DEVICE FOR A MOTOR VEHICLE
DISPOSITIF ESSUIE-GLACE POUR UN VEHICULE AUTOMOBILE

(30) Priorität: 30.06.2003 DE 10329574
(43) Veröffentlichungstag der Anmeldung: 05.04.2006
(73) Patentinhaber: ROBERT BOSCH GMBH, 70442 Stuttgart (DE)
(72) Erfinder: WEILER, Michael, 363-9 Chungchongbuk-Do (KR); ZIMMER, Joachim, 77880 Sasbach (DE)
(86) Internationale Anmeldenummer: PCT/DE2004/000880
(87) Internationale Veröffentlichungsnummer: WO 2005/000644

(56) Entgegenhaltungen:
- EP-A- 1 040 972
- US-B1- 6 254 167

## Beschreibung

Die Erfindung betrifft eine Scheibenwischvorrichtung für ein Kraftfahrzeug mit mindestens einem Wischerlager und einem mit der Karosserie verbundenen Befestigungselement, wobei zwischen dem mindestens einen Wischerlager und dem Befestigungselement ein Entkopplungselement zur Geräuschentkopplung angeordnet ist.

Fußgänger sind beim Zusammenstoß mit Fahrzeugen völlig ungeschützt. Besonders die unnachgiebigen, harten Teile unterhalb der Motorhaube führen oft zu schweren Verletzungen beim Aufprall eines Fußgängers auf ein Fahrzeug. Die Scheibenwischvorrichtung befindet sich in einem Bereich, in dem Fußgänger beim Aufprall auf ein Fahrzeug häufig auftreffen. Die allgemein aus dem Stand der Technik bekannten Scheibenwischvorrichtungen haben den Nachteil, dass sie eine große Verletzungsgefahr für einen Fußgänger beim Aufprall auf das Fahrzeug darstellen.

Die EP 1 040 972 A2 offenbart eine Scheibenwischvorrichtung, bei der die Verletzungsgefahr für einen Fußgänger beim Aufprall auf ein Fahrzeug reduziert ist. Die Scheibenwischvorrichtung umfasst ein Wischerlager und ein mit einer Karosserie verbundenes Befestigungselement. Zwischen dem Wischerlager und dem Befestigungselement ist ein Entkopplungselement aus einem elastischen Kunststoff angeordnet. Das Entkopplungselement ist mit dem Befestigungselement lösbar verbunden, so dass sich bei einer genügend hohen Krafteinwirkung, beispielsweise bei Aufprall eines Fußgängers, das Wischerlager relativ zum Befestigungselement verschieben kann. Das Entkopplungselement ist ringförmig ausgebildet.

Eine weitere Scheibenwischvorrichtung, bei der die Verletzungsgefahr für einen Fußgänger beim Aufprall reduziert wird, offenbart die US 6 254 167 B1. Die Scheibenwischvorrichtung umfasst ein Wischerlager, ein mit einer Karosserie verbundenes Befestigungselement und ein zwischen Wischerlager und Befestigungselement angeordnetes Entkopplungselement aus einem elastischen Material. Wischerlager, Befestigungselement und Entkopplungselement sind konzentrisch angeordnet. Entkopplungselement und Wischerlager sind zylinderförmig ausgebildet. Das Wischerlager umfasst einen ringförmigen Vorsprung, der in eine ringförmige Nut des Entkopplungselementes eingreift. Überschreitet eine auf das Wischerlager axial wirkende Kraft einen definierten Schwellenwert, löst sich der ringförmige Vorsprung aus der Nut, Wischerlager und Entkopplungselement verschieben sich axial gegeneinander.

Die Erfindung hat die Aufgabe, eine in ihrem Aufbau verbesserte Scheibenwischvorrichtung zu schaffen.

Die Erfindung löst die gestellte Aufgabe durch eine Scheibenwischvorrichtung für ein Kraftfahrzeug mit mindestens einem Wischerlager und einem an der Karosserie befestigten Befestigungselement, wobei zwischen dem mindestens einen Wischerlager und dem Befestigungselement ein Entkopplungselement zur Geräuschentkopplung angeordnet ist, wobei das Entkopplungselement und/oder das Wischerlager lösbar mit dem Befestigungselement verbunden ist, wobei erfindungsgemäß das Entkopplungselement mehrere Stege aufweist, die in Öffnungen des Wischerlagers eingeschoben sind.

Durch die lösbare Verbindung des Entkopplungselementes und/oder des Wischerlagers mit dem Befestigungselement kann das Entkopplungselement und/oder das Wischerlager durch den Aufprall eines Fußgängers vom Befestigungselement gelöst werden, so dass das Entkopplungselement und/oder das Wischerlager beim Aufprall nachgeben, und somit das Verletzungsrisiko des Fußgängers beim Auftreffen auf die Scheibenwischvorrichtung reduzieren. Dadurch, dass das Entkopplungselement mehrere Stege aufweist, die in Öffnungen des Wischerlagers eingeschoben sind, wird ein fester Sitz des Wischerlagers am Befestigungselement gewährleistet. Dadurch wird insbesondere verhindert, dass sich Befestigungselement und Wischerlager in einem ungewünschten Maße axial gegeneinander verdrehen können.

In einer Weiterbildung der Erfindung sind das Befestigungselement und/oder das Entkopplungselement mit einem Hinterschnitt versehen, wobei das Befestigungselement und/oder das Entkopplungselement aus einem verformbaren Material gefertigt sind. Der Hinterschnitt an dem Befestigungselement und/oder an dem Entkopplungselement bewirkt eine Arretierung des Entkopplungselementes an dem Befestigungselement in einer axialen Richtung einer Wischerlagerwelle. Diese Arretierung ist erforderlich, um im Betrieb der Scheibenwischvorrichtung ihr ordnungsgemäßes Funktionieren zu gewährleisten. Dadurch, dass das Befestigungselement und/oder das Entkopplungselement aus einem verformbaren Material gefertigt sind, kann im Falle eines Aufpralles des Fußgängers auf das Fahrzeug die Arretierung zwischen dem Befestigungselement und dem Entkopplungselement trotz des Hinterschnittes gelöst werden. Dadurch weicht das Entkopplungselement und/oder das Wischerlager dem Aufprall aus. Folglich wird das Verletzungsrisiko für den Fußgänger erheblich reduziert.

Der Hinterschnitt kann konstruktiv sehr einfach durch einen Materialvorsprung im Endbereich des Befestigungselementes verwirklicht werden. Dieser Materialvorsprung kann Vorteilhafterweise als ein Wulst ausgebildet sein. Abhängig von der Größe des Wulstes wird die erforderliche Aufprallkraft definiert, die herrschen muss, um das Entkopplungselement von dem Befestigungselement zu lösen.

Um die Aufprallenergie gleichmäßig und nicht ruckartig abbauen zu können, kann der Materialvorsprung im Endbereich des Befestigungselementes mehrere hintereinander angeordnete Zähne aufweisen. Wenn der Fußgänger auf die erfindungsgemäße Scheibenwischvorrichtung aufprallt, wird das Entkopplungselement durch den Aufprall über die hintereinander angeordneten Zähne geschoben, die während der Verschiebung des Entkopplungselementes eine relativ hohe, der Aufprallkraft entgegengesetzte Reibungskraft erzeugen. Dadurch wird die Aufprallenergie in Wärmeenergie umgewandelt, und somit abgebaut.

In einer weiteren Ausgestaltung der Erfindung kann der Hinterschnitt einen hakenförmigen Endbereich des Entkopplungselementes aufweisen. An diesem hakenförmigen Endbereich kann beim Aufprall das Wischerlager gegen das Entkopplungselement gedrückt werden, so dass das Wischerlager beim Aufprall zusammen mit dem Entkopplungselement entlang der Wischerlagerwelle verschoben und somit vom Befestigungselement gelöst wird.

Um die erforderliche Kraft zum Lösen der Arretierung zwischen dem Entkopplungselement und dem Befestigungselement noch besser definieren zu können, kann zwischen dem Materialvorsprung im Endbereich des Befestigungselementes und dem hakenförmigen Endbereich des Entkopplungselementes eine Scheibe angeordnet sein. Aus demselben Grund ist es auch möglich, dass der Hinterschnitt am Befestigungselement eine schräge Auflagefläche, an der die Scheibe oder das Entkopplungselement aufliegt, aufweist. Abhängig vom Winkel dieser schrägen Auflagefläche, kann die Kraft zum Lösen des Entkopplungselementes vom Befestigungselement definiert werden.

Zweckmäßigerweise besteht vor dem Aufprall auf die Scheibenwischvorrichtung ein Verschiebeweg zwischen einem Wischerarm und dem Befestigungselement.

Aus Gründen einer optimalen Verformbarkeit beim Aufprall kann das Entkopplungselement aus einem Kunststoff, insbesondere aus einem Elastomer gefertigt sein. Aus demselben Grund ist es auch möglich, das Befestigungselement aus einem Kunststoff zu fertigen. Auch aus Gründen einer leichten Herstellbarkeit der relativ komplizierten Gestalt des Entkopplungselementes und des Befestigungselementes ist es sinnvoll, wenn das Entkopplungselement und das Befestigungselement aus einem Kunststoff gefertigt sind.

Um bei hohen Stückzahlen Kosteneinsparungen zu erzielen, und um bei einem hochautomatisierten Fertigungskonzept die Prozesssteuerung zu optimieren, ist es vorteilhaft, wenn das mindestens eine Wischerlager und/oder das Befestigungselement und/oder das Entkopplungselement standardisierte Gleichteile sind.

Nachfolgend werden verschiedene Ausführungsbeispiele einer erfindungsgemäßen Scheibenwischvorrichtung anhand der beiliegenden Zeichnung näher erläutert.

Im Einzelnen zeigen:
- Fig. 1: eine perspektivische Draufsicht auf eine erfindungsgemäße Scheibenwischvorrichtung;
- Fig. 2: eine Explosionsansicht der Scheibenwischvorrichtung aus Fig. 1;
- Fig. 3a: eine Seitenansicht auf die Scheibenwischvorrichtung aus Fig. 1 vor einem Aufprall eines Fußgängers;
- Fig. 3b: eine Seitenansicht auf die Scheibenwischvorrichtung aus Fig. 1 nach dem Aufprall des Fußgängers;
- Fig. 4: eine Schnittansicht durch die Scheibenwischvorrichtung aus Fig. 3a entlang der Linie B-B;
- Fig. 5: eine Schnittansicht durch eine zweite Ausführungsform der erfindungsgemäßen Scheibenwischvorrichtung;
- Fig. 6: eine Detailansicht eines Details im Endbereich eines Wischerlagers aus Fig. 5;
- Fig. 7: eine Schnittansicht durch eine dritte Ausführungsform der erfindungsgemäßen Scheibenwischvorrichtung;
- Fig. 8: eine Detailansicht eines Details im Endbereich eines Wischerlagers aus Fig. 7.

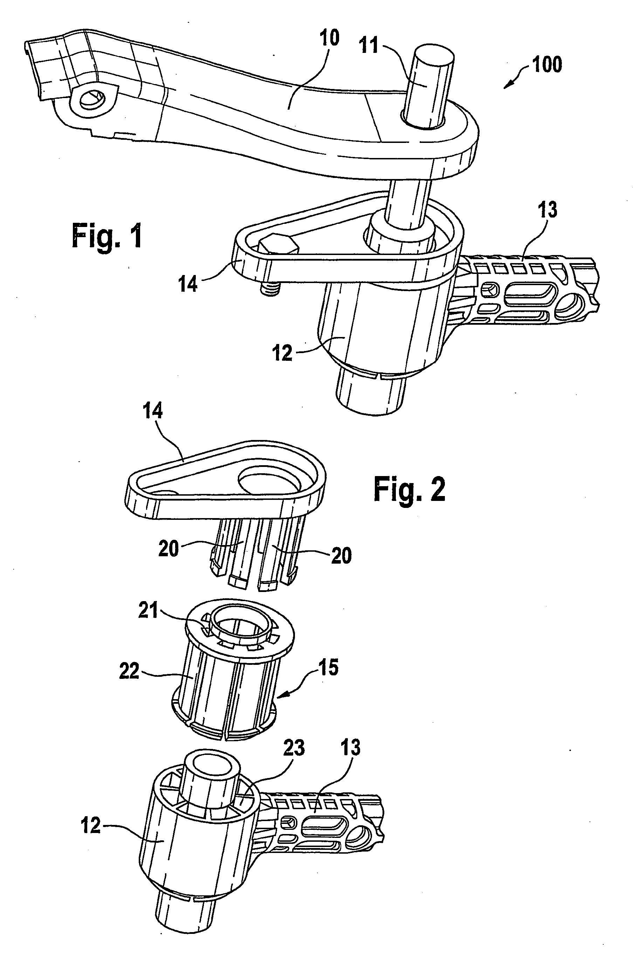

Die Fign. 1, 2, 3a und 3b zeigen eien Scheibenwischvorrichtung 100 mit einen Wischarm 10, der mittels einer Wischerlagerwelle 11 mit einem Wischerlager 12 verbunden ist. An dem Wischerlager 12 ist ein Crimpzapfen 13 zur Aufnahme eines hier nicht näher dargestellten Platinenrohres angeordnet. Oberhalb des Wischerlagers 12 ist ein Befestigungselement 14 angebracht, mit dem die erfindungsgemäße Scheibenwischvorrichtung 100 an eine hier ebenfalls nicht gezeigte Fahrzeugkarosserie befestigbar ist. Zwischen dem an der Karosserie befestigten Befestigungselement 14 und dem Wischerlager 12 ist ein Entkopplungselement 15 zur Geräuschentkopplung vorgesehen. Das Entkopplungselement 15 wird bei der Montage axial in das Wischerlager 12 eingeschoben. In das Entkopplungselement 15 wird ebenfalls axial das Befestigungselement 14 eingesteckt (siehe Fig. 2). Wie in Fig. 2 ersichtlich, weist das Befestigungselement 14 Stege 20 auf, die in Öffnungen 21 des Entkopplungselementes 15 bei der Montage einsteckbar sind. Das Entkopplungselement 15 weist Stege 22 auf, die bei der Montage in Öffnungen 23 des Wischerlagers eingeschoben werden können. Da das Entkopplungselement 15 und das Wischerlager 12 lösbar mit dem Befestigungselement 14 verbunden sind, kann der Wischerarm 10 durch eine Aufprallkraft F um einen Verschiebeweg 15 nach unten gedrückt werden.

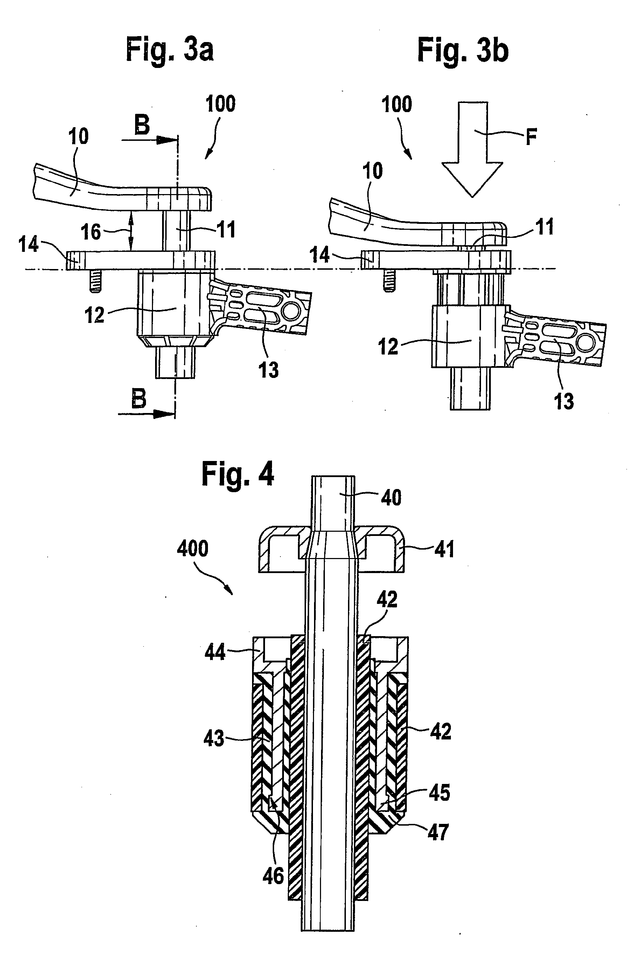

Fig. 4 zeigt eine Scheibenwischvorrichtung 400mit einer Wischerwelle 40, auf die ein Wischarm 41 aufgesteckt ist. Die Wischerwelle 40 ist in einem Wischerlager 42 gelagert. Auf das Wischerlager 42 ist ein Entkopplungselement 43 montiert und auf dem Entkopplungselement 43 ist ein Befestigungselement 44 angeordnet. Das Befestigungselement 44 weist einen Wulst 45 auf, der von einem entsprechend geformten Hinterschnitt 46 am Entkopplungselement 43 umgriffen wird. Somit bilden der Hinterschnitt 46 und der Wulst 45 eine Arretierung des Entkopplungselements 43 mit dem Befestigungselement 44. Diese Arretierung hängt davon ab, wie stark der Wulst 45 und der Hinterschnitt 46 ausbildet sind. Ferner weist das Entkopplungselement 43 einen hakenförmigen Endbereich 47 auf. Auf diesem hakenförmigen Endbereich 47 stützt sich beim Aufprall das Wischerlager 42 ab. Somit kann das Wischerlager 42 beim Aufprall das Entkopplungselement 43 nach unten verschieben. Bei der Verschiebung des Entkopplungselementes 43 nach unten wird das Entkopplungselement 43 mit seinem Hinterschnitt 46 über den Wulst 45 geschoben. Somit bestimmen der Wulst 45 und der Hinterschnitt 46 eine erforderliche Lösekraft, um die durch den Wulst 45 und den Hinterschnitt 46 gebildete Arretierung zu lösen. Da das Entkopplungselement häufig aus einem Elastomer gefertigt ist, hängt die erforderliche Kraft zum Lösen der Arretierung zwischen dem Wulst 45 und dem Hinterschnitt 46 neben deren Abmessungen auch von der Härte des Elastomers ab.

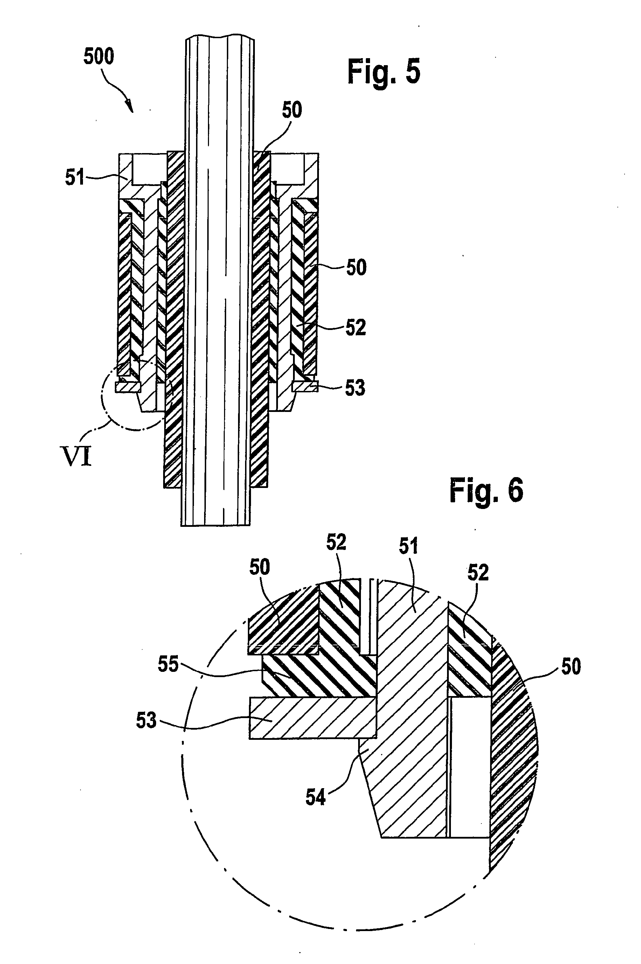

Die Fign. 5 und 6 zeigen eine Scheibenwischvorrichtung 500 mit einem Wischerlager 50, einem Befestigungselement 51 und einem Entkopplungselement 52. Zwischen dem Befestigungselement 51 und dem Entkopplungselement 52 ist eine Scheibe 53 angeordnet. Die Scheibe 53 ist in axialer Abwärtsrichtung durch einen Wulst 54 arretiert. Im Aufprallfall wird das Wischerlager 50 zusammen mit dem Entkopplungselement 52 nach unten gedrückt, wodurch die Scheibe 53 über den Wulst 54 geschoben wird, und somit die Arretierung gelöst wird.

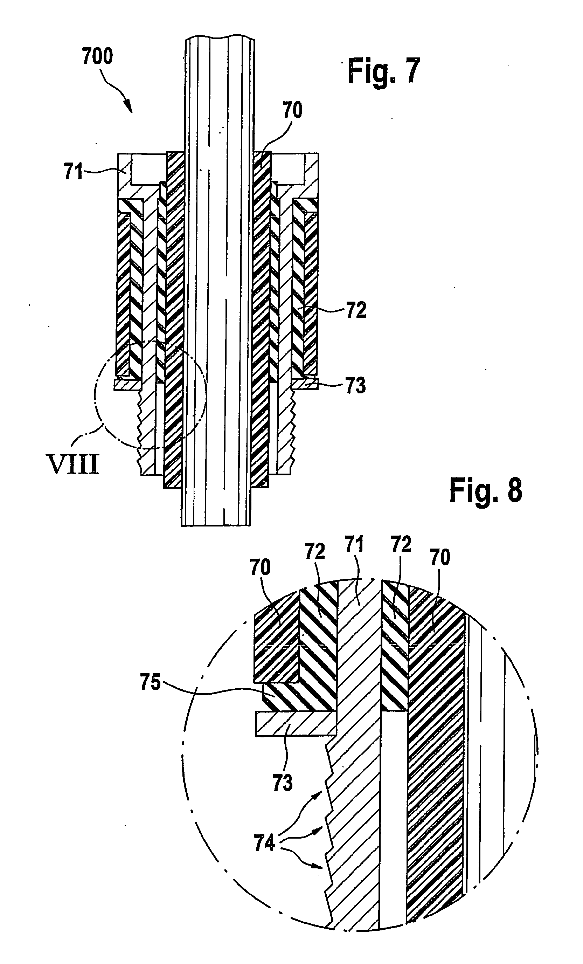

Die Fign. 7 und 8 zeigen eine Scheibenwischvorrichtung 700 mit einem Wischerlager 70, einem Befestigungselement 71 und einem Entkopplungselement 72. Zwischen dem Entkopplungselement 72 und dem Befestigungselement 71 ist eine Scheibe 73 angeordnet. Unterhalb der Scheibe 73 erstrecken sich hintereinander angeordnete Zähne 74. Beim Aufprall eines Fußgängers wird das Wischerlager 70 zusammen mit dem Entkopplungselement 72 und der Scheibe 73 nach unten verschoben. Bei dieser Verschiebung schiebt sich die Scheibe 73 über die hintereinander angeordneten Zähne 74, so dass der Aufprallkraft eine erhöhte Reibungskraft entgegenwirkt. Dadurch wird die Aufprallenergie in Wärmeenergie umgewandelt und somit gleichmäßig abgebaut. Entsprechend der Schräge der Flanken der Zähne 74 kann die der Aufprallkraft entgegenwirkende Reibungskraft festgelegt werden.

## Patentansprüche

1. Scheibenwischvorrichtung (100, 400, 500, 700) für ein Kraftfahrzeug mit mindestens einem Wischerlager (12, 42, 50, 70) und einem mit einer Karosserie verbundenen Befestigungselement (14, 44, 51, 71), wobei zwischen dem mindestens einen Wischerlager (12, 42, 50, 70) und dem Befestigungselement (14, 44, 51, 71) ein Entkopplungselement (15, 43, 52, 72) zur Geräuschentkopplung angeordnet ist, wobei das Entkopplungselement (15, 43, 52, 72) und/oder das Wischerlager (12, 42, 50, 70) lösbar mit dem Befestigungselement (14, 44, 51, 71) verbunden ist, **dadurch gekennzeichnet, dass** das Entkopplungselement (15) mehrere Stege (22) aufweist, die in Öffnungen (23) des Wischerlagers (12) eingeschoben sind.

2. Scheibenwischvorrichtung (100, 400, 500, 700) nach Anspruch 1, **dadurch gekennzeichnet, dass** das Befestigungselement (14, 44, 51, 71) und/oder das Entkopplungselement (15, 43, 52, 72) mit einem Hinterschnitt versehen sind, und das Befestigungselement (14, 44, 51, 71) und/oder das Entkopplungselement (15, 43, 52, 72) aus einem verformbaren Material gefertigt sind.

3. Scheibenwischvorrichtung (100, 400, 500, 700) nach Anspruch 2, **dadurch gekennzeichnet, dass** der Hinterschnitt ein Materialvorsprung im Endbereich des Befestigungselementes (14, 44, 51, 71) ist.

4. Scheibenwischvorrichtung (400, 500) nach Anspruch 3, **dadurch gekennzeichnet, dass** der Materialvorsprung im Endbereich des Befestigungselementes (44, 51) als ein Wulst (45, 54) ausgebildet ist.

5. Scheibenwischvorrichtung (700) nach Anspruch 3, **dadurch gekennzeichnet, dass** der Materialvorsprung im Endbereich des Befestigungselementes (71) mehrere hintereinander angeordnete Zähne (74) aufweist.

6. Scheibenwischvorrichtung (400, 500, 700) nach einem der Ansprüche 2 bis 5, **dadurch gekennzeichnet, dass** der Hinterschnitt ein hakenförmiger Endbereich (47, 55, 75) des Entkopplungselementes (43, 52, 72) ist.

7. Scheibenwischvorrichtung (500, 700) nach einem der Ansprüche 2 bis 6, **dadurch gekennzeichnet, dass** zwischen dem Materialvorsprung im Endbereich des Befestigungselementes (51, 71) und dem hakenförmigen Endbereich (55, 75) des Entkopplungselementes (52, 72) eine Scheibe (53, 73) angeordnet ist.

8. Scheibenwischvorrichtung (400, 500, 700) nach einem der Ansprüche 2 bis 7, **dadurch gekennzeichnet, dass** der Hinterschnitt am Befestigungselement (44, 51, 71) eine schräge Auflagefläche, an der die Scheibe (53, 73) oder das Entkopplungselement (43) aufliegt, aufweist.

9. Scheibenwischvorrichtung (100, 400, 500, 700) nach einem der Ansprüche 1 bis 8, **dadurch gekennzeichnet, dass** vor einem Aufprall auf die Scheibenwischvorrichtung (100, 400, 500, 700) ein Verschiebeweg (15) zwischen einem Wischerarm (10) und dem Befestigungselement (14, 44, 51, 71) besteht.

10. Scheibenwischvorrichtung (100, 400, 500, 700) nach einem der Ansprüche 1 bis 9, **dadurch gekennzeichnet, dass** das Entkopplungselement (15, 43, 52, 72) aus einem Kunststoff, insbesondere aus einem Elastomer gefertigt ist.

11. Scheibenwischvorrichtung (100, 400, 500, 700) nach einem der Ansprüche 1 bis 10, **dadurch gekennzeichnet, dass** das Befestigungselement (14, 44, 51, 71) aus einem Kunststoff gefertigt ist.

12. Scheibenwischvorrichtung (100, 400, 500, 700) nach einem der Ansprüche 1 bis 11, **dadurch gekennzeichnet, dass** das mindestens eine Wischerlager und/oder das Befestigungselement (14, 44, 51, 71) und/oder das Entkopplungselement (15, 43, 52, 72) Gleichteile sind.

## Claims

1. Windscreen wiping device (100, 400, 500, 700) for a motor vehicle, with at least one wiper bearing (12, 42, 50, 70) and a fastening element (14, 44, 51, 71) which is connected to the bodywork, wherein a decoupling element (15, 43, 52, 72) for decoupling noise is arranged between the at least one wiper bearing (12, 42, 50, 70) and the fastening element (14, 44, 51, 71), and wherein the decoupling element (15, 43, 52, 72) and/or the wiper bearing (12, 42, 50, 70) is connected releasably to the fastening element (14, 44, 51, 71), **characterized in that** the decoupling element (15) has a plurality of webs (22) which are pushed into openings (23) in the wiper bearing (12).

2. Windscreen wiping device (100, 400, 500, 700) according to Claim 1, **characterized in that** the fastening element (14, 44, 51, 71) and/or the decoupling element (15, 43, 52, 72) are provided with an undercut, and the fastening element (14, 44, 51, 71), and/or the decoupling element (15, 43, 52, 72) are manufactured from a deformable material.

3. Windscreen wiping device (100, 400, 500, 700) according to Claim 2, **characterized in that** the undercut is a material projection in the end region of the fastening element (14, 44, 51, 71).

4. Windscreen wiping device (400, 500) according to Claim 3, **characterized in that** the material projection in the end region of the fastening element (44, 51) is designed as a bead (45, 54).

5. Windscreen wiping device (700) according to Claim 3, **characterized in that** the material projection in the end region of the fastening element (71) has a plurality of consecutively arranged teeth (74).

6. Windscreen wiping device (400, 500, 700) according to one of Claims 2 to 5, **characterized in that** the undercut is a hook-shaped end region (47, 55, 75) of the decoupling element (43, 52, 72).

7. Windscreen wiping device (500, 700) according to one of Claims 2 to 6, **characterized in that** a washer (53, 73) is arranged between the material projection in the end region of the fastening element (51, 71) and the hook-shaped end region (55, 75) of the decoupling element (52, 72).

8. Windscreen wiping device (400, 500, 700) according to one of Claims 2 to 7, **characterized in that** the undercut on the fastening element (44, 51, 71) has an oblique supporting surface on which the washer (53, 73) or the decoupling element (43) rests.

9. Windscreen wiping device (100, 400, 500, 700) according to one of Claims 1 to 8, **characterized in that,** prior to an impact against the windscreen wiping device (100, 400, 500, 700), there is a displacement path (15) between a wiper arm (10) and the fastening element (14, 44, 51, 71).

10. Windscreen wiping device (100, 400, 500, 700) according to one of Claims 1 to 9, **characterized in that** the decoupling element (15, 43, 53, 72) is manufactured from a plastics material, in particular from an elastomer.

11. Windscreen wiping device (100, 400, 500, 700) according to one of Claims 1 to 10, **characterized in that** the fastening element (14, 44, 51, 71) is manufactured from a plastics material.

12. Windscreen wiping device (100, 400, 500, 700) according to one of Claims 1 to 11, **characterized in that** the at least one wiper bearing and/or the fastening element (14, 44, 51, 71) and/or the decoupling element (15, 43, 52, 72) are identical parts.

## Revendications

1. Dispositif essuie-glace (100, 400, 500, 700) pour un véhicule automobile, comprenant au moins un support d'essuie-glace (12, 42, 50, 70) et un élément de fixation (14, 44, 51, 71) connecté à une carrosserie, un élément de désaccouplement (15, 43, 52, 72) pour le désaccouplement des bruits étant disposé entre l'au moins un support d'essuie-glace (12, 42, 50, 70) et l'élément de fixation (14, 44, 51, 71), l'élément de désaccouplement (15, 43, 52, 72) et/ou le support d'essuie-glace (12, 42, 50, 70) étant connectés de manière amovible à l'élément de fixation (14, 44, 51, 71), **caractérisé en ce que** l'élément de désaccouplement (15) présente plusieurs nervures (22) qui sont enfoncées dans des ouvertures (23) du support d'essuie-glace (12).

2. Dispositif essuie-glace (100, 400, 500, 700) selon la revendication 1, **caractérisé en ce que** l'élément de fixation (14, 44, 51, 71) et/ou l'élément de désaccouplement (15, 43, 52, 72) sont pourvus d'une contre-dépouille et l'élément de fixation (14, 44, 51, 71) et/ou l'élément de désaccouplement (15, 43, 52, 72) sont fabriqués en un matériau déformable.

3. Dispositif essuie-glace (100, 400, 500, 700) selon la revendication 2, **caractérisé en ce que** la contre-dépouille est une saillie de matériau dans la région d'extrémité de l'élément de fixation (14, 44, 51, 71).

4. Dispositif essuie-glace (400, 500) selon la revendication 3, **caractérisé en ce que** la saillie de matériau est réalisée dans la région d'extrémité de l'élément de fixation (44, 51) sous forme de bourrelet (45, 54).

5. Dispositif essuie-glace (700) selon la revendication 3, **caractérisé en ce que** la saillie de matériau dans la région d'extrémité de l'élément de fixation (71) présente plusieurs dents (74) disposées les unes derrière les autres.

6. Dispositif essuie-glace (400, 500, 700) selon l'une quelconque des revendications 2 à 5, **caractérisé en ce que** la contre-dépouille est une région d'extrémité en forme de crochet (47, 55, 75) de l'élément de désaccouplement (43, 52, 72).

7. Dispositif essuie-glace (500, 700) selon l'une quelconque des revendications 2 à 6, **caractérisé en ce qu'**entre la saillie de matériau dans la région d'extrémité de l'élément de fixation (51, 71) et la région d'extrémité en forme de crochet (55, 75) de l'élément de désaccouplement (52, 72), est disposé un disque (53, 73).

8. Dispositif essuie-glace (400, 500, 700) selon l'une quelconque des revendications 2 à 7, **caractérisé en ce que** la contre-dépouille présente, sur l'élément de fixation (44, 51, 71), une surface d'appui oblique sur laquelle s'applique le disque (53, 73) ou l'élément de désaccouplement (43).

9. Dispositif essuie-glace (100, 400, 500, 700) selon l'une quelconque des revendications 1 à 8, **caractérisé en ce qu'**avant un impact sur le dispositif d'essuie-glace (100, 400, 500, 700), il existe une course de déplacement (15) entre un bras d'essuie-glace (10) et l'élément de fixation (14, 44, 51, 71).

10. Dispositif essuie-glace (100, 400, 500, 700) selon l'une quelconque des revendications 1 a 9, **caractérisé en ce que** l'élément de désaccouplement (15, 43, 52, 72) est fabriqué en plastique, notamment en élastomère.

11. Dispositif essuie-glace (100, 400, 500, 700) selon l'une quelconque des revendications 1 à 10, **caractérisé en ce que** l'élément de fixation (14, 44, 51, 71) est fabriqué en plastique.

12. Dispositif essuie-glace (100, 400, 500, 700) selon l'une quelconque des revendications 1 à 11, **caractérisé en ce que** l'au moins un support d'essuie-glace et/ou l'élément de fixation (14, 44, 51, 71) et/ou l'élément de désaccouplement (15, 43, 52, 72) sont des pièces identiques.
